# EUROPÄISCHE PATENTSCHRIFT

(11) **EP 3 953 097 B1**
(45) Veröffentlichungstag und Bekanntmachung des Hinweises auf die Patenterteilung: **29.07.2026**
(21) Anmeldenummer: 20716752.9
(22) Anmeldetag: 31.03.2020
(51) Int. Cl.: B23K 20/10, B23K 31/12, B29C 65/00

(54) **VERFAHREN ZUM ZERSTÖRUNGSFREIEN PRÜFEN EINER QUALITÄT EINER ULTRASCHALLSCHWEISSUNG**
METHOD FOR NON-DESTRUCTIVELY TESTING A QUALITY OF AN ULTRASONIC WELD
PROCÉDÉ DE CONTRÔLE SANS DESTRUCTION DE LA QUALITÉ D'UN SOUDAGE PAR ULTRASONS

(30) Priorität: 09.04.2019 DE 102019109263
(43) Veröffentlichungstag der Anmeldung: 16.02.2022
(60) Teilanmeldung: 23182629.8
(73) Patentinhaber: Lisa Dräxlmaier GmbH, 84137 Vilsbiburg (DE)
(72) Erfinder: KLIMAS, Felix, 84085 Langquaid (DE); HERZING, Thomas, 84032 Landshut (DE); LEHMANN, Lutz, 84028 Landshut (DE); ZEMANN, Daniel, 84036 Landshut (DE)
(86) Internationale Anmeldenummer: PCT/EP2020/059139
(87) Internationale Veröffentlichungsnummer: WO 2020/207865

(56) Entgegenhaltungen:
- EP-A1- 2 946 869
- DE-A1- 102015 120 165
- KR-A- 20180 095 776
- US-A1- 2003 218 050
- US-A1- 2007 068 907
- US-A1- 2009 283 569
- US-A1- 2015 330 952
- US-B2- 8 783 545
- MICHAEL BRÖKELMANN: "Entwicklung einer Methodik zur Online-Qualitätsüberwachung des Ultraschall-Drahtbondprozesses mittels integrierter Mikrosensorik", 1 September 2008, HEINZ NIXDORF INSTITUT: HNI-VERLAGSSCHRIFTENREICHE, Paderborn, ISBN: 978-3-939350-57-6

## Beschreibung

Die Erfindung betrifft ein Verfahren zum zerstörungsfreien Prüfen einer Qualität einer Ultraschallschweißung, eine Messvorrichtung und eine Ultraschallschweißanlage.

Beim Ultraschallschweißen wird die Qualität einer Schweißung durch eine mikroskopische Fläche bestimmt, in der zwischen den Fügeteilen eine stoffschlüssige Verbindung durch die Schweißung zustande kam. Die Ausbildung einer stoffschlüssigen Verbindung lässt sich nicht quantifizieren. Auch lässt sich nicht sicher feststellen, ob überhaupt eine stoffschlüssige Verbindung vorliegt, ohne die Schweißung einer zerstörenden Prüfung zu unterziehen, in der die maximal notwendige Bruchkraft zur Trennung der Fügepartner als Kriterium für die Schweißqualität herangezogen wird. Stichprobenartige zerstörende Prüfungen dieser Art dienen in der Fertigung im Rahmen einer statistischen Prozesskontrolle der Qualitätssicherung. Aufgrund von häufig geringen Losgrößen bei solchen Stichproben lässt sich eine Prozesskontrolle statistisch nicht sauber durchführen. Üblicherweise findet in regelmäßigen Intervallen und nach verschiedenen Ereignissen, wie einem Schichtwechsel oder einer Umrüstung, eine zerstörende Prüfung von beispielsweise 5 Proben statt, deren Bruchkraft allesamt oberhalb einer Eingriffsgrenze liegen müssen, die häufig willkürlich festgelegt ist.

US 2003/0218050 A1 zeigt eine Bondvorrichtung mit einem Ultraschallhorn, das mit einem Ultraschallvibrator gekoppelt ist, und einem Bondwerkzeug, das mit dem Ultraschallhorn gekoppelt ist. Die Ultraschallbondung wird auf ein Werkstück angewendet. Ein Ultraschalldetektor und ein Anzeiger zum Anzeigen eines Ausgangssignals von dem Ultraschalldetektor dienen dazu auf der Grundlage des Ausgangssignals des Ultraschalldetektors eine Beurteilung des Bondzustands vorzunehmen. Mit dieser Anordnung wird die Ultraschallschwingung des Bondwerkzeugs in der Bondvorrichtung ständig überwacht, wodurch das Auftreten von Bondfehlern verringert und der Zeitpunkt für den Austausch des Bondwerkzeugs festgelegt werden kann.

US 8 783 545 B2 zeigt ein Verfahren zur Qualitätskontrolle beim Ultraschallbonden, bei dem eine Transducer-Bondwerkzeugeinheit und ein Ultraschallgenerator verwendet werden und bei dem während des Bondens mit einem oder mehrere Sensoren Messsignale für einen oder mehrere Parameter, die sich während des Bondens ändern können, zur Beurteilung der Bondgualität und/oder zur Beeinflussung des Bondens erfasst werden. Während des Bondens wird mindestens ein Geschwindigkeitsprofil-Messsignal erfasst, das das Zeit/Geschwindigkeitsprofil der Spitze des Ultraschallwerkzeugs in dessen Schwingungsrichtung darstellt. Die Erfindung bezieht sich auch auf eine Bondvorrichtung, die zur Durchführung des Verfahrens geeignet ist.

KR 2018 0095776 A zeigt ein zur Überwachung einer Ultraschallschweißung, wobei anhand des Verlaufs der elektrischen Leistung, die während des Ultraschallschweißens zugeführt wird, festgestellt wird, ob die Schweißung normal verläuft oder nicht.

DE 10 2015 120 165 A1 beschreibt ein Verfahren zur Überwachung und/oder Bestimmung der Reinheit und Verbindungsgüte einer mittels einer Ultraschallschweißung herzustellenden oder hergestellten Verbindungsstelle zweier Fügepartner, wobei das Schwingungsverhalten während dem Fügeprozess hinsichtlich eines Ist-Wertes der Schwingungsfrequenz und/oder der Schwingungsamplitude wenigstens eines am Fügeprozess beteiligten Fügepartners und/oder beim Fügeprozess verwendeten Werkzeugs einer Ultraschallschweißvorrichtung mittels Messung mit wenigstens einer Messvorrichtung, die ausgebildet ist, zur Quantifizierung der mechanischer Schwingungen, erfasst wird und mit einem vorbestimmten Soll-Wert als Referenzwert verglichen wird. Die Quantifizierung der mechanischen Schwingungen während des Fügeprozesses erfolgt mittels Laservibrometers.

Bei gegenwärtigen Anlagen wird lediglich die Schweißzeit als Überwachungskriterium gemessen. Durch Einlernen wird eine Sollzeit bei gegebenen Schweißparametern festgelegt, die nicht über ein bestimmtes Maß hinaus überschritten werden darf.

Die Fähigkeit von Schweißanlagen, verlässliche Schweißungen hoher Qualität zu fertigen, kann auf verschiedene Weise beeinträchtigt werden. Es kann zu schleichenden Verschleißerscheinungen von Komponenten des Schwingsystems kommen (z.B. von Piezoaktoren), bei denen nicht klar ist, wie lange sie bereits die Schweißqualität vereinzelter Schweißungen beeinträchtigen, bevor diese Qualitätsverringerung durch eine Bruchprüfung im Rahmen der statistischen Prozesskontrolle sichtbar wird. Außerdem ist es nicht möglich, die Ursache für die Qualitätsverringerung aus der Bruchprüfung abzuleiten. Dadurch kann in der Fertigung nicht entschieden werden, ob die Schweißungen, die einer negativen Bruchprüfung voran gingen bereits mangelhaft waren. In einer Fertigungslinie mit nachfolgenden Verarbeitungsprozessen, lassen sich diese potentiell mangelhaften Schweißungen auch nicht mehr aussortieren und teilweise nicht einmal mehr auffinden.

Eine Beeinträchtigung der Qualität kann auch durch Rüstfehler auftreten. Die Anlagen müssen aufgrund geringer Losgrößen der Tagessatzproduktion häufig umgerüstet werden. Dabei herrscht oft erheblicher Zeitdruck. Eine mangelhafte Schweißqualität macht sich hier durch die vorgeschriebene Bruchprüfung nach dem Rüstvorgang zwar bemerkbar, allerdings ist die Ursache der Qualitätsverringerung unbekannt.

Es ist eine Aufgabe der Erfindung, ein verbessertes Konzept zum Prüfen einer Qualität einer Ultraschallschweißung bereitzustellen.

Eine Messung und Auswertung von Größen, die einen Schwingvorgang während des Schweißprozesses charakterisieren, ermöglichen eine umfassende und aussagekräftige Beurteilung des Schweißprozesses.

Gemäß einem ersten Aspekt wird die Aufgabe durch ein Verfahren mit allen Merkmalen des Anspruchs 1 gelöst.

Die erfasste zeitabhängige Messgröße wird durch Anwendung einer Fourieranalyse ausgewertet. Das Ergebnisses der Auswertung wird mit einem Referenzwert verglichen, um die Qualität der Schweißung zu prüfen. Der Referenzwert kann hierbei als Sollwert gesehen werden, d.h. der Referenzwert gibt vor, wie das Ergebnis der Auswertung aussehen sollte. Die zeitabhängige Messgröße ist eine messbare physikalische Größe, die mit dem Schweißprozess zusammenhängt. Die Qualität der Ultraschallschweißung kann eine Güte der Ultraschallschweißung sein. Das heißt, die Qualität der Ultraschallschweißung beschreibt, wie sicher bzw. gut die Ultraschallschweißung ausgeführt wurde und deren Haltbarkeit.

Eine Schweißanlage kann einen Ultraschallgenerator umfassen, der eingerichtet ist, ein Steuersignal zum Erzeugen einer Ultraschallschwingung zu erzeugen. Das Steuersignal kann ein elektrisches Signal sein, das einen Piezoaktor anregen kann eine mechanische Schwingung auszuführen. Eines Sonotrode kann mit dem Piezoaktor mechanisch gekoppelt sein, um eine Ultraschallschwingung des Piezoaktors mechanisch auf ein Werkstück zu übertragen.

Die zeitabhängige Messgröße kann eine von der Zeit abhängige Variable sein. Da sich oft unter unterschiedlichen Bedingungen durchgeführte Schweißungen nicht wesentlich in ihrem Durchschnittswert oder einer einzelnen Fouriertransformation über den gesamten Schweißprozess unterscheiden, sondern nur in der Form ihrer Kurve, wenn die physikalischen Größen gegen die Zeit aufgetragen werden, ist es vorteilhaft, die Messgröße zeitabhängig zu erfassen.

Die Anwendung einer Fourieranalyse kann ein Anwenden einer Kurzzeit-Fourieranalyse umfassen, aus der die zeitliche Abhängigkeit der Amplitude, Frequenz oder anderer Größen bestimmt werden kann. Einzelne Fensterabschnitte der Kurzzeit-Fourieranalyse können auf eine geeignete Fensterfunktion zurückzugreifen, insbesondere bei der Berechnung einer Amplitude ein Flattop-Fenster, bei der Berechnung einer Frequenz oder einer Phase ein Rechteckfenster sein. Zeropadding und Interpolation können ebenso angewendet werden, insbesondere bei der Berechnung einer Frequenz bei einer Kurzzeit-Fourieranalyse mit kleinen Fenstergrößen.

Ziel der Schwingungsanalyse ist eine 100%-Prozesskontrolle, die der verlässlichen Klassifikation und dem Aussortieren von Schlechtschweißungen dient. Anwendung ist also die Detektion aller für die Festigkeit der Schweißung relevanten Einschränkungen. Diverse Verschmutzungen, die die Reibung zwischen den Fügeteilen reduzieren (Schmierfett, Handcreme etc.) lassen sich anhand reduzierter Betriebsfrequenz von "guten" Schweißungen unterscheiden. Auch die Oberflächenbeschaffenheit (Rauheit, Oxidschicht) hat denselben Einfluss auf die Regelung der Betriebsfrequenz.

Da sich die Bruchfestigkeit der Schweißungen nach einem Chargenwechsel teils erheblich ändern kann, sollte sich diese auch in der Schwingungsanalyse widerspiegeln. Versuche zeigen, dass sich ein Abfall der Festigkeit durch erhöhte Impedanz und reduzierte Wirkleistung, dafür höhere Blindleistung bemerkbar macht. Unterschiedliche Werkstücke, insbesondere ein unterschiedlicher Leitungsaufbau, beispielsweise mit hochflexiblen Litzen oder Standardlitzen, wirkt sich auf den zeitlichen Verlauf etlicher physikalischer Größen aus.

Hier zeigt sich, dass die Analyse des gesamten zeitlichen Verlaufes vorteilhaft ist. Analog sind auch andere Eigenschaften, die die Steifigkeit der Litzen beeinflussen, wie z.B. die Länge der Abisolierung in der Schwingungsanalyse sichtbar. Die Leitungslänge manifestiert sich allerdings nicht in den Messdaten, da der Einfluss von Fügeteildimensionen nur bei starren Körpern zu tragen kommt, in denen sich stehende Wellen bilden können. Litzenleitungen besitzen dafür eine zu starke Dämpfung. Bei Kontaktteilen hingegen können Resonanzeffekte auftreten, wenn sie im Hinblick auf Eigenfrequenzen ein kritisches Design aufweisen. Es lässt sich durch die Schwingungsanalyse feststellen, ob Risse durch Spannungsüberhöhungen in solchen Resonanzfällen aufgetreten sind.

Als weitere Anwendung neben dem Aussortieren von Schlechtschweißungen ist es möglich, die Schwingungsanalyse zur Parameteroptimierung zu nutzen. Es kann auf eine maximale Bruchkraft optimiert werden. Mit der Schwingungsanalyse kann effizient auf bestimmte elektrische oder mechanische Sollkurven hin optimiert werden.

Außerdem ermöglicht die Schwingungsanalyse auch eine Unterstützung bei der Ursachensuche schlechter Schweißqualität. Bei ausschließlichem Vorliegen geringer Bruchkräfte lässt sich über die Ursache keine Aussage treffen. Eine Sichtprüfung kann unterscheiden zwischen Unter- und Überschweißen. Durch die Schwingungsanalyse wird hingegen die komplette Dynamik des Schweißprozesses sichtbar.

Die vorliegende Erfindung hat den Vorteil, dass neben der Auslenkung andere Messgrößen gemessen werden, insbesondere Storm und Spannung, dadurch Phasenbeziehungen und davon abgeleitete Größen wie Impedanz und Leistung berechnet werden können, und alle diese Größen als zeitabhängige Größen über den gesamten Schweißprozess berechnet werden können, anstatt pro Schweißung lediglich zwei skalare Zahlenwerten zu berechnen. Die Auslenkung wird durch einen Wirbelstromsensor gemessen. Mit einer 100%-Prozesskontrolle durch Schwingungsanalyse machen sich Verschleißerscheinungen in einer Veränderung in der Schwingungsdynamik bemerkbar. Die Schwingungsanalyse ermöglicht eine Lokalisierung von Fehlern, und damit eine Effizienzsteigerung beim Rüstvorgang.

In einer Ausgestaltung entspricht der Zeitraum der Dauer des Schweißprozesses.

Alle Messgrößen können über die gesamte Schweißzeit gemessen werden, also die Dauer des Schweißprozesses. Es kann also bei mehrstufigen Schweißprozessen auch eine Auswertung hinsichtlich der einzelnen Stufen erfolgen. In diesen Fällen lässt sich zusätzliche Information gewinnen, da für das Schwingsystem während der einzelnen Stufen unterschiedliche physikalische Bedingungen in der Fügezone herrschen und damit für das Schwingsystem unterschiedliche Randbedingungen gelten. Schweißungen werden beispielsweise in Vorschall, Kompaktierschall, Schweißschall und Nachschall unterteilt. Insbesondere bei Aluminiumschweißprozessen werden alle vier Stufen, deutlich getrennt von Intervallen ohne Schallanregung, durchlaufen, bei Kupferschweißprozessen können Vorschall und Schweißschall ausreichend sein.

In einer Ausgestaltung ist die Messgröße charakterisierend für ein mechanisches Schwingungsverhalten des Schweißprozesses und umfasst eine Scherkraft undr eine Auslenkung einer Sonotrode.

Die Messung der Auslenkung kann an verschiedenen Stellen der Anlage erfolgen. Eine Messstelle möglichst nahe der Koppelfläche der Sonotrode kann direkte Rückschlüsse auf die Bewegung in der Fügezone zulassen. Aus Platzgründen, insbesondere zur Vermeidung von Störung des Werkers, kann auch das der Koppelfläche gegenüber liegende Ende der Sonotrode gemessen werden und auf die Bewegung an der Koppelfläche zurückgeschlossen werden, insbesondere beim Linearschweißen.

Die Messung der Auslenkung, kann mit verschiedenen Messverfahren erfolgen. Die Auslenkung kann der Geschwindigkeit entsprechen. Beispielsweise kann die Auslenkung mit einer Vorrichtung gemessen werden, bei der ein Wirbelstromsensor möglichst nahe an die Sonotrodenfläche herangeführt wird, die orthogonal zur Bewegungsrichtung und damit im rechten Winkel zur Koppelfläche steht. Die Messstelle sollte sich möglichst nahe an der Koppelfläche befinden, um eine möglichst genaue Messung der Bewegung in der Fügezone zu erhalten. Der Wirbelstromsensor eignet sich für diese Aufgabe besonders gut, da er sich relativ leicht an verschiedenen Stellen des Schwingsystems anbringen lässt. Die Einschränkung für den Werker kann hierbei geringer sein als bei einer Messung mit laseroptischen Systemen, wie etwa Laser-Vibrometrie.

Ist die Normalkraft der Sonotrode bekannt, so kann mit mehreren Kraftsensoren am Amboss die Scherkraft abgeschätzt werden.

In einer Ausgestaltung ist die Messgröße ferner charakterisierend für ein elektrisches Schwingungsverhalten des Schweißprozesses und umfasst einen elektrischen Strom und/oder eine elektrische Spannung zur Ansteuerung eines Piezoaktors.

Die Messung der elektrischen Messgrößen ist mit wenig Aufwand verbunden und liefert präzise Ergebnisse und hat einen geringen Störeinfluss auf den Fertigungsprozess.

Die Messung der elektrischen Messgrößen kann mit einem Hochspannungstastkopf und/oder einer Strommesszange einem Strompfad zwischen Generator und Piezoaktor erfolgen, insbesondere an einem Hochfrequenzkabel. Die Messung kann auch direkt in den Ultraschallgenerator integriert werden, wo im Rahmen des Regelkreises ebenfalls solche Messungen an der Endstufe durchgeführt werden können.

Mit der Schwingungsmessung können dabei als Messgrößen Spannung und Strom am einen Ende des Schwingsystems, insbesondere am Piezoaktor, bzw. eine Scherkraft und eine Auslenkung, die einer Geschwindigkeitsmessung entspricht, am anderen Ende, insbesondere an der Koppelfläche der Sonotrode, gemessen und mit Verfahren der Fourieranalyse ausgewertet werden. Insbesondere können die Messgrößen über den gesamten Schweißprozess gemessen werden. Es können einzelne dieser Messgrößen gemessen werden. Werden mehrere der oben genannten Messgrößen gemessen, kann dies die Aussagekraft der Analyse erhöhen. Die elektrische Messung kann einfach zu realisieren sein. Die mechanische Messung kann Informationen bereitstellen, was schwingungstechnisch in der Fügezone passiert.

In einer Ausgestaltung umfasst das Erfassen einer Messgröße das Erfassen einer Differenzgröße und einer Flussgröße.

In einer Ausgestaltung umfasst das Auswerten ein Errechnen einer Phasenbeziehung zweier erfasster Messgrößen, einer Betriebsfrequenz zum Betrieb einer Sonotrode, einer Amplitude einer Phase einer erfassten Messgröße und/oder einer Amplitude der Betriebsfrequenz zum Betrieb der Sonotrode.

In einer Ausgestaltung umfasst das Auswerten weiter ein Ableiten einer Leistungsgröße, insbesondere eine Scheinleistung, eine Wirkleistung, eine Blindleistung, und/oder eine Impedanzgröße, insbesondere Scheinwiderstand, Resistenz, Reaktanz, aus der errechneten Phasenbeziehung zweier erfasster Messgrößen.

Die Messung einer Differenzgröße und einer Flussgröße kann elektrisch, insbesondere durch Messung von Spannung und/oder Strom, oder mechanisch, insbesondere durch Messung von Kraft und/oder Geschwindigkeit, erfolgen.

Aus den Messwerten zusammengehöriger Differenzgrößen und Flussgrößen, insbesondere Spannung und Strom lassen sich vier Größen ableiten: deren Phasenbeziehung, die Betriebsfrequenz und die jeweiligen Amplituden, insbesondere ist der Verlauf der Amplituden bei allen vier Messgrößen gleich, sie lässt sich also aus allen Messgrößen ableiten. Aus diesen vier Grundgrößen lassen sich Leistungsgrößen, insbesondere Scheinleistung, Wirkleistung, Blindleistung, sowie Impedanzgrößen, insbesondere Scheinwiderstand, Resistenz, Reaktanz, ableiten.

In einer Ausgestaltung beruht das Auswerten auf Basis einer Grundschwingung und/oder einer Oberschwingung der erfassten Messgröße.

Die oben genannten Messgrößen lassen sich nicht nur für die Grundschwingung berechnen, sondern ebenfalls für die Oberschwingungen berechnen, also prinzipiell für jede Harmonische, die bei gegebener Abtastrate noch berechnet werden kann. Es hat sich gezeigt, dass manche Effekte besser bei höheren Harmonischen sichtbar gemacht werden können.

In einer Ausgestaltung umfasst das Vergleichen ein Vergleichen einer Betriebsfrequenz und/oder einer Phasendifferenz zwischen einem elektrischen Strom und einer elektrischen Spannung zum Ansteuern eines Piezoaktors.

In einer Ausgestaltung geht dem Erfassen eine Referenzwertermittlung voraus und basiert auf einer Testreihe und/oder auf einem selbstlernenden Algorithmus, insbesondere mit einem neuronalen Netz.

Auf diese Weise kann eine Qualitätsüberwachung implementiert werden. Gelingt es durch Versuche nachzuweisen, dass ein Zusammenhang zwischen bestimmten Qualitätsmängeln von Fügeteilen oder Schweißungen und den entsprechenden nach obigen Verfahren ermittelten zeitlichen Verläufen der analysierten Größen besteht, können Kriterien ermittelt werden, nach denen in der Fertigung Schweißungen, die hinreichend ähnliche charakteristischen Verläufe aufweisen als Schlechtschweißung, aussortiert werden. Findet man keine Kriterien, nach denen sich die zeitlichen Verläufe von Schlechtschweißungen hinreichend signifikant von den zeitlichen Verläufen der Gutschweißungen unterscheiden, lässt sich eine Qualitätsüberwachung mit ähnlichen Mitteln wie der bereits bestehenden Schweißüberwachung durch Aufnahme der Schweißzeit realisieren. Ähnlich wie bei dieser, in der eine Soll-Schweißzeit eingelernt wird, und die folgenden Schweißungen davon nur um einen bestimmten Betrag abweichen dürfen, lässt sich auch hier eine Überwachung durch Vergleich mit eingelernten Soll-Kurven realisieren. Denkbar ist ein durch Einlernen festgelegtes Band, innerhalb dessen Schweißungen eine ausreichende Bruchkraft besitzen und damit als "Gut" klassifiziert werden, und in dem sich die Kurven nachfolgender Schweißungen befinden müssen, um selbst als "gut" klassifiziert zu werden. Befinden sich die Kurven innerhalb dieses Bandes, lässt sich mit einer statistischen Sicherheit schließen, dass auch diese Schweißungen dieselbe Qualität aufweisen, wie die zerstörend geprüften der Einlernphase.

Bestimmte physikalische Größen eignen sich gut als Unterscheidungskriterium zwischen Gut- und Schlechtschweißungen. Darunter die Größen Betriebsfrequenz und Phasendifferenz zwischen Strom und Spannung und davon abgeleitet die Reaktanz und die Wirkleistung, sowie der Klirrfaktor der Strommessung. Insbesondere lässt sich feststellen, dass Verunreinigungen, die die Reibung zwischen den Fügeteilen reduzieren, wie zum Beispiel Schmierfett oder Handcreme, und deshalb zu ungenügender stoffschlüssiger Verbindung d.h. zu Schweißungen mit geringer Bruchkraft, führen, zu einer Reduktion der Betriebsfrequenz über den gesamten Schweißprozess führt. Bei Aluminiumschweißungen gilt dies sowohl für den Kompressionsschall als auch für den Schweißschall. Die Reduktion der Frequenz ist bei kontrollierter Aufbringung von Schmierfett oder Handcreme bereits statistisch signifikant und beträgt nach einer kurzen Regelungszeit über den ganzen Schweißprozess etwa 50 Hz (Mittelwert zu Mittelwert der jeweiligen Stichproben), bei Aufbringung größerer Mengen Verunreinigung bis zu 100 Hz.

Durch die Qualitätsüberwachung kann eine geeignete Klassifikation der Schweißungen in Gut- und Schlechtschweißungen vorgenommen werden, sodass Qualitätsmängel möglichst verlässlich erkannt werden. Da die maximale Bruchkraft durch zerstörende Prüfung gegenwärtig das einzige Qualitätskriterium für die Ausbildung einer stoffschlüssigen Verbindung ist, sollte die Klassifikation durch Schwingungsanalyse möglichst deckungsgleich mit einer Klassifikation durch zerstörende Prüfung sein. Schweißungen, deren Bruchkraft also unterhalb einer Eingriffsgrenze liegen, sollen möglichst verlässlich durch die Schwingungsanalyse als Schlechtschweißungen detektiert werden.

Aus einer oder mehreren der zeitlichen Verläufe der physikalischen Messgrößen kann ein Kriterium isoliert werden, das als binärer Klassifikator eine möglichst kleine Zahl an Klassifikationsfehlern aufweist, insbesondere eine hohe Sensitivität bzw. Trennschärfe, also eine hohe Wahrscheinlichkeit für die Vermeidung eines Fehlers 2. Art, d.h. der Klassifikation einer Schlechtschweißung als Gutschweißung. Neben einer hohen Sensitivität ist eine hohe Selektivität, also die Vermeidung von Fehlern 1. Art, d.h. der Klassifikation einer Gutschweißung als Schlechtschweißung, erstrebenswert.

Die Selektivität kann durch eine vorgegebene Schranke, das Signifikanzniveau, kontrolliert werden. Da sich Sensitivität und Selektivität nicht gleichzeitig maximieren lassen, ist für eine ausreichende Trennschärfe eine möglichst große Differenz der Mittelwerte und eine geringe Streuung der zu klassifizierenden Verteilungen vorteilhaft. Es wäre auch möglich, die Trennschärfe weiter zu erhöhen, beispielsweise durch eine Erhöhung der Stichprobenzahl beim Einlernen, da dadurch der Standardfehler verringert wird, allerdings wird fertigungsbegleitend eine möglichst kleine Stichprobenzahl zum Einlernen angestrebt.

Diese Voraussetzungen sind beispielsweise bei einem Versuche mit kontrolliert mit Handcreme beschichteten Kontaktteilen für die Betriebsfrequenz gegeben. Aus der Differenz der Mittelwerte und den jeweiligen Standardabweichungen ergibt sich eine hohe Trennschärfe, die eine verlässliche Klassifikation erlaubt, ohne dabei eine für die Fertigung störende geringe Selektivität aufzuweisen, d.h. ohne häufigen Ausschuss durch fälschlich als schlecht klassifizierte Schweißungen zu erzeugen.

Als Erweiterung des vorgestellten Verfahrens ist es möglich, einen Klassifikator auch mittels Mustererkennung selbst lernender Algorithmen zu implementieren. Damit ließe sich mit einer großen Datenmenge über die zeitlichen Verläufe der analysierten Größen der Schwingungsanalyse und den dazugehörigen Bruchkräften ein Klassifikator durch ein Neuronales Netz implementieren. Wenn die Daten über einen langen Zeitraum und anlagenübergreifend verlässlich zwischen Gut- und Schlechtschweißungen unterschieden können, kann auch auf die Einlernphase verzichtet werden.

In einer Ausgestaltung umfasst das Verfahren ein Regeln des Schweißprozesses basierend auf einem Ergebnis des Vergleichs. Hierdurch kann eine Anpassung der Schweißanlage im laufenden Betrieb erfolgen.

In einer Ausgestaltung umfasst das Verfahren ein Anpassen eines Parameters einer den Schweißprozess durchführenden Schweißanlage basierend auf dem Ergebnis des Vergleichs.

Bei dem oben beschriebenen Verfahren kann das Ergebnis des Regelungsvorgangs der Anlage analysiert werden, insbesondere die von dem Generator als Stellgröße genutzte Frequenz, um daraus eine Klassifikation der Schweißungen in Gut- und Schlechtschweißungen abzuleiten. Die beschriebenen Methoden lassen sich allerdings auch in eine Regelung der Schweißanlage integrieren. In Bezug auf die Qualität wird dabei nicht mehr analysiert um zu klassifizieren, sondern um diese zu verbessern. Anders ausgedrückt, es geht dabei nicht mehr darum, Schlechtschweißungen zu erkennen, sondern sie zu vermeiden.

In einer Ausgestaltung umfasst das Verfahren eine Schwingungsanalyse zur Darstellung der Dynamik des Schweißprozesses basierend auf dem Vergleich, um ein Unter- oder ein Überschweißen zu erfassen.

Gemäß einem zweiten Aspekt wird die Aufgabe durch eine Messvorrichtung mit allen Merkmalen des Anspruchs 14 gelöst.

Gemäß einem dritten Aspekt wird die Aufgabe durch eine Ultraschallschweißanlage gelöst, umfassend eine Sonotrode zum Aufbringen einer mechanischen Kraft auf ein Werkstück; einen Piezoaktor, der eingerichtet ist, ein elektrisches Steuersignal in eine mechanische Schwingung umzusetzen und auf die Sonotrode zu übertragen; einen Ultraschallgenerator, der eingerichtet ist, das elektrische Steuersignal bereitzustellen; und eine Messvorrichtung gemäß dem zweiten Aspekt.

Die Charakterisierung des Anlagenzustandes und die damit verbundene Detektion von Schäden ermöglicht ein gezieltes Auswechseln von Verschleißteilen, genau dann, wenn sich der Verschleiß bemerkbar macht und damit Auswirkung auf die Schweißqualität hat. Damit können die fest vorgegebenen bzw. nach Gutdünken des Anlagenrüsters vorgenommenen Austauschzeiten durch flexible, bedarfsorientierte und damit auch kostengünstigere Austauschzeiten ersetzt werden.

Des Weiteren kann man sicherstellen, dass alle Werkzeuge und Komponenten des Schwingsystems aus schwingungstechnischer Sicht stets funktionsfähig sind und damit keine durch Anlagenverschleiß fehlerhafte Schweißungen produziert werden. Im unüberwachten Fall kann eine erhebliche Zahl an Schweißungen produziert werden, bevor der Schaden an der Anlage bemerkt wird. Es ist dann weder abzusehen, wie lange bereits mit der defekten Anlage geschweißt wurde, noch ob es Auswirkung auf die Qualität dieser Schweißungen gab.

Es ist möglich, bei sichtbarerem Auftreten von Fehlern oder Verringerung der Schweißqualität, deren Ursache aber nicht bekannt ist, das oben beschriebene Verfahren und die oben beschriebene Messvorrichtung als System zur Fehlerdiagnose und Fehlerlokalisierung zu nutzen.

Eine laufende Überwachung der Qualität der Schweißanlage durch Charakterisierung des Anlagenzustands kann entweder direkt oder indirekt erfolgen.

Eine indirekte Analyse des Anlagenzustands durch Messung von Spannung und Strom bzw. Kraft und Auslenkung während der Schweißung kann ebenso wie oben zur Überwachung der Schweißqualität beschrieben erfolgen. Die Amplituden der Messgrößen, deren Phasendifferenz und die Betriebsfrequenz sind hierbei die Grundgrößen, die die Schwingungsdynamik des Schwingsystems der Anlage beschreiben. Bestimmte Verschleißerscheinungen und Rüstfehler machen sich im zeitlichen Verlauf dieser Größen bemerkbar und sind damit detektierbar. Beispiel für eine gut detektierbare Verschlechterung des Anlagenzustands sind alterungsbedingte Verschleißerscheinungen des Piezoaktors. Hierbei kann die Regelung die Stellgröße auf auffällige Werte verstellen um die gewünschten physikalischen Bedingungen zu erreichen. Das macht sich zum Beispiel an einer für die Schweißanwendung ungewöhnlich geringe Phasendifferenz zwischen Strom und Spannung bemerkbar. Da ein alterungsbedingter Verschleiß schleichend auftritt, kann zu einem Zeitpunkt, an dem die Schweißungen noch keine Qualitätseinschränkung erfahren, bereits gezielt durch Austausch des Piezoaktors reagiert werden.

Beispiel für einen detektierbaren Rüstfehler ist ein fehlerhaft eingestellter Höhenanschlag der Sonotrode, oder ein nicht festgeschraubter Höhenanschlag, der durch die Vibration in eine andere Position wandern kann. In der Schwingungsanalyse macht sich mit zunehmend höher eingestelltem Höhenanschlag, der die Bewegung der Sonotrode nach unten immer früher blockiert, eine auffällige Verschiebung etlicher Messgrößen bemerkbar, sobald auch die Bruchkraft der Schweißungen stark zu sinken beginnt. Insbesondere sind dies eine Verringerung der Stromamplitude und/oder der Phasendifferenz zwischen Strom und Spannung. Als Folge hiervon kann vor allem die Blindleistung stark sinken.

Weitere Rüstfehler betreffen ein Anziehmoment des Schwingsystems, defekte Lagerung oder Einspannung, defekte Vertikaleinheiten durch defekte Federn, schlecht fixierter Amboss.

Die Erfindung wird im Folgenden anhand von Ausführungsbeispielen und Figuren näher beschrieben. Es zeigen:
- Fig. 1: eine schematische Darstellung einer Schweißanlage gemäß einem Ausführungsbeispiel;
- Fig. 2: ein Flussdiagramm für ein Verfahren gemäß einem Ausführungsbeispiel;
- Fig. 3a: einen Graphen eines Frequenzverlaufs gemäß einem Ausführungsbeispiel;
- Fig. 3b: einen Graphen eines Frequenzverlaufs gemäß einem weiteren Ausführungsbeispiel;
- Fig. 3c: einen Graphen eines Stromverlaufs gemäß einem Ausführungsbeispiel;
- Fig. 4: einen Graphen eines Stromamplitudenverlaufs gemäß einem weiteren Ausführungsbeispiel; und
- Fig. 5: einen Graphen eines Amplitudenverlaufs einer Sonotrodenauslenkung gemäß einem Ausführungsbeispiel.

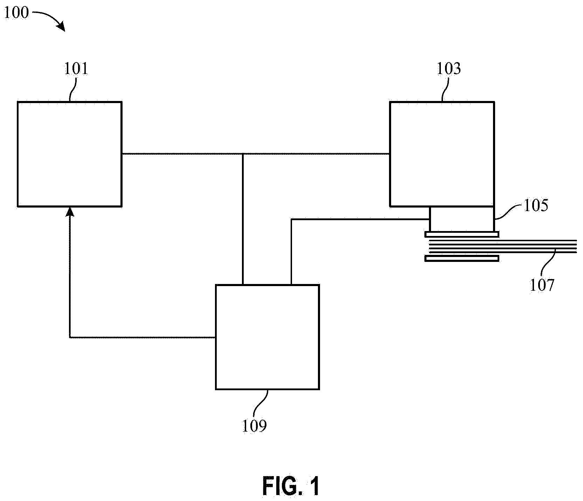

Fig. 1 zeigt eine schematische Darstellung einer Schweißanlage 100 gemäß einem Ausführungsbeispiel. Die Schweißanlage 100 ist eine Ultraschallschweißanlage. Die Schweißanlage 100 weist einen Ultraschallgenerator 101 auf. Der Ultraschallgenerator 101 ist ein Signalgenerator, der eingerichtet ist, ein elektrisches Signal zu erzeugen. Das elektrische Signal ist beispielsweise nach einer Spannung geregelt und bildet eine Ultraschallschwingung ab.

Die Schweißanlage 100 weist einen Piezoaktor 103 auf. Der Piezoaktor 103 ist elektrisch mit dem Ultraschallgenerator 101 gekoppelt und eingerichtet, das elektrische Signal des Ultraschallgenerators 101 in eine mechanische Schwingung umzuwandeln. Hierzu macht sich die Schweißanlage 100 den piezoelektrischen Effekt zunutze.

Mit dem Piezoaktor 103 ist eine Sonotrode 105 mechanisch gekoppelt. In einem weiteren Ausführungsbeispiel umfasst die Sonotrode 105 den Piezoaktor 103.

Die mechanische Ultraschallschwingung des Piezoaktors 103 wird durch die mechanische Kopplung zwischen Sonotrode 105 und Piezoaktor 103 auf die Sonotrode 105 übertragen.

In die Sonotrode 105 kann ein Werkstück, insbesondere ein Kabelpaket 107, eingelegt werden. Hierbei werden abisolierte freie Enden der einzelnen Kabel des Kabelpakets 107 in die Sonotrode 105 eingelegt.

Wird die Schweißanlage 100 in Betrieb genommen, so erzeugt der Ultraschallgenerator 101 das elektrische Signal, der Piezoaktor 103 wandelt das elektrische Signal in eine mechanische Schwingung um, die mittels der Sonotrode 107 auf das Kabelpaket 107 übertragen wird.

Hierbei werden die einzelnen Kabel des Kabelpakets 107 miteinander verschweißt.

Die Schweißanlage 100 umfasst eine Messvorrichtung 109. Die Messvorrichtung 109 ist eingerichtet, das elektrische Signal des Ultraschallgenerators 101 zu messen. Die Messvorrichtung 109 ist eingerichtet, eine mechanische Schwingungsgröße an der Sonotrode 105 zu messen. Bei dem elektrischen Signal erfasst die Messvorrichtung 109 eine Spannung und einen Strom. Der Strom wird über einen Transformator nichtinvasiv gemessen. In einem weiteren Ausführungsbeispiel wird der Strom über einen Strommesswiderstand gemessen. Die mechanische Auslenkung wird über einen Wirbelstromsensor gemessen.

Um Referenzkurven, d.h. einen Referenzwert bzw. einen Sollwert, zu erhalten, werden Kabelpakete 107 mit Störmitteln präpariert oder ohne zusätzliche Maßnahmen verschweißt und die Messgrößen werden aufgezeichnet. Anschließend wir über einen zusätzlichen Test, die Qualität der Schweißung überprüft, insbesondere zerstörend überprüft.

Auf diese Weise ergibt sich ein Vorrat an Referenzkurven, die einer guten oder einer schlechten Messung zugeordnet werden können.

Die über die Zeit gemessenen Größen werden einer Fourieranalyse unterzogen, insbesondere einer Kurzzeit-Fourieranalyse. Bei dieser Auswertung kann das Zeitverhalten der Schweißanalage 100 im Betrieb erfasst werden.

Fehlerhafte Schweißungen und Anlagenzustände können mit dieser Schwingungsanalyse detektiert werden. Fehlerhaft heißt in diesem Fall, dass die daraus resultierenden Schweißungen eine Bruchkraft unterhalb der Toleranzgrenze aufweisen. Die Bruchkraft wird für die Referenzkurven vorgegeben. Im Betrieb kann dann anhand eines Vergleichs der Ausgewerteten Messgrößen mit den Referenzkurven, d.h. Referenzwerten bzw. Sollwerten, ermittelt werden, ob die Schweißung gut oder schlecht ist, ohne einen Bruchtest durchführen zu müssen.

Es kann schwer sein, globale Kennwerte definieren zu können, die anlagenübergreifend und dauerhaft als Unterscheidungskriterium zwischen Gut- und Schlechtschweißungen für unterschiedliche Schweißanlagen 100 gelten. Stattdessen müssen bei jedem Prüfvorgang, insbesondere nach einem Chargenwechsel, einem Rüstvorgang oder einem Schichtwechsel, Proben geschweißt und auf ihre Bruchkraft geprüft werden. Hierbei können Gutschweißungen ermittelt werden. Aus den Kurvenverläufen dieser Gutschweißungen wird ein Toleranzband definiert, das der Klassifikation dient. Schweißungen außerhalb des Bandes werden als Schlechtschweißungen klassifiziert.

Eine solche Vorgehensweise mittels Einlernens rührt daher, dass sich die Kurven nach jedem Rüsten unterscheiden, obwohl die Qualität der Schweißungen sich nicht verändert hat. Auch die Stromamplitude, sowie sämtliche abgeleitete elektrische Größen unterscheiden sich nach den Rüstvorgängen ebenfalls. Nur die Spannungsamplitude bleibt in all den Beispielen unverändert.

Nach jedem Rüstvorgang kann deshalb ein neuer Einlernvorgang durchgeführt werden. Ebenso nach bestimmten Zeitintervallen. Bei 10 Schweißproben, die 24 Stunden später gefertigt wurden, in denen die Anlage nicht umgerüstet und nicht benutzt wurde, bleibt zwar die Kurve für die Betriebsfrequenz unverändert, die Phasendifferenz kann jedoch signifikant abnehmen.

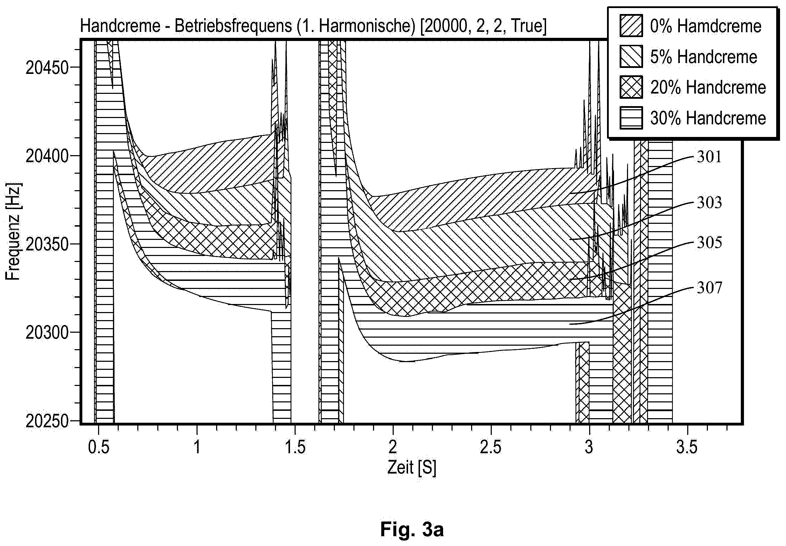

Finden nach einem Rüstvorgang oder bestimmten Zeitintervall ein Einlernen durch 10 Schweißproben statt, die alle die vorgeschriebene Bruchkraft erreichen, so lässt sich ein Toleranzband definieren, in dem oder in dessen Nähe sich alle Kurven künftiger Gutschweißungen befinden sollten. Grafisch lässt sich das anstatt mit Einlernkurven als Einlernband darstellen. Solche Bänder sind in den Fig. 3a bis 3c dargestellt.

Im beschriebenen Ausführungsbeispiel wurden nur 10 Proben herangezogen. In einem weiteren Ausführungsbeispiel kann diese Zahl variieren. Würde man alle Schweißungen als "schlecht" klassifizieren, deren Kurven sich außerhalb des Bandes befinden, würde das eine zu geringe Selektivität bedeuten, also viele fälschlich als Schlechtschweißung klassifizierte Gutschweißungen. Deshalb muss das Toleranzband, das tatsächlich zur Klassifizierung herangezogen wird, breiter sein als dieses. Die Ermittlung dieses Bandes kann mit statistischen Methoden erfolgen, insbesondere eine Verbreiterung an jedem Zeitpunkt um eine oder zwei Standardabweichungen der 10 Messwerte.

Für die Einlernschweißungen herrschen zum Teil andere physikalische Bedingungen als für die darauffolgenden Schweißungen der Serienfertigung. Insbesondere sind die Leitungslängen der Kabelpakete 107 beim Einlernen deutlich kürzer, und auch die Taktfrequenz und damit die Werkzeugtemperatur kann sich unterscheiden. Es muss sichergestellt werden, dass diese Unterschiede keinen Einfluss auf die gemessenen Kurven besitzen.

Die Taktfrequenz hat auch bei großen Schwankungen wenig Einfluss auf irgendeine der gemessenen Kurven. Am meisten ist die Betriebsfrequenz betroffen.

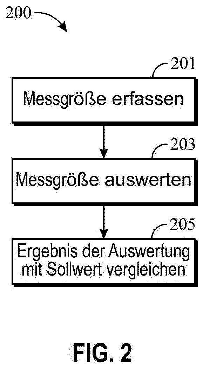

Fig. 2 zeigt ein Flussdiagramm 200 für ein Verfahren gemäß einem Ausführungsbeispiel.

In einem ersten Schritt 201 werden Messgrößen erfasst. Hierbei wir über einen Zeitraum, insbesondere den gesamten Schweißprozess, eine elektrische und mechanische Charakteristische Schwingungsgröße erfasst. In einem weiteren Ausführungsbeispiel werden nur elektrische oder nur mechanische Messgrößen erfasst.

In einem Schritt 203 werden die erfassten Messgrößen ausgewertet. Hierbei werden die erfassten Zeitverläufe zu den Messgrößen mit einer Fourieranalyse ausgewertet.

In Schritt 205 werden die ausgewerteten Ergebnisse mit einem Referenzwert, insbesondere einer Sollkurve verglichen. Der Referenzwert stellt hierbei ein Band dar, in dem sich der Kurvenverlauf befinden darf.

Um den Einfluss der Leitungslängen zu bestimmen wurde eine Untersuchung mit 3 Leitungslängen mit jeweils 2 Proben durchgeführt. Übergreifend über verschiedene Längen befinden sich die Betriebsfrequenzen in einem Band von maximal 30Hz Breite, was etwa der Breite der Bänder im Versuch zum Rüstvorgang entspricht. Darüber hinaus weichen die Kurven der kurzen Leitungslänge von 13cm von den anderen ab, in der Fertigung werden in der Prozesskontrolle allerdings 30cm-Leitungen benutzt, deren Kurven sich kaum von denjenigen längerer Leitungen unterscheiden. Es ist also nicht davon auszugehen, dass die Leitungslänge einen signifikanten Einfluss hat.

Nach jedem Chargenwechsel werden in der Fertigung Bruchprüfungen zur Prozesskontrolle durchgeführt. Diese Schweißungen lassen sich auch für einen Einlernprozess nutzen. Dieser ist notwendig, da sich durch den Chargenwechsel die Kurven signifikant ändern können, ohne dass damit notwendigerweise eine Änderung der Bruchkräfte einhergeht. Am Beispiel dreier verschiedener Chargen nominell gleicher Leitungen mit jeweils 10 Schweißproben ergeben sich bei Betriebsfrequenz, Stromamplitude und Phasendifferenz sowie sämtlichen abgeleiteten Größen deutlich getrennte Toleranzbänder. Auch beim Klirrfaktor ist der Unterschied deutlich sichtbar.

Fig. 3a zeigt einen Graphen eines Frequenzverlaufs gemäß einem Ausführungsbeispiel. Auf der Abszissenachse ist die Zeit und auf der Ordinatenachse die Frequenz aufgetragen, hier im Bereich von 20250 Hz unten und 20450 Hz oben.

Ein realitätsnahes Beispiel für Verringerung der Schweißqualität ist Verunreinigung der Schweißfläche durch Handcreme. Für diesen Versuch wurde ein Flächenanteil der Schweißfläche durch eine Schablone gezielt mit Handcreme verunreinigt.

Eine Kurve 301 entspricht einem Auftrag von 0% Handcreme, eine Kurve 303 entspricht einem Auftrag von 5% Handcreme, eine Kurve 305 entspricht einem Auftrag von 20% Handcreme und eine Kurve 307 entspricht einem Auftrag von 30% Handcreme.

An der Betriebsfrequenz lässt sich sehr gut erkennen, dass sie mit zunehmender Verunreinigung durch Handcreme abnimmt. Andere Größen lassen keine Veränderung erkennen. Lediglich bei ganz spezifischen Größen und Abschnitten von Höherharmonischen ist eine Tendenz zu erkennen, z.B. bei der 2. Harmonischen bei der Phasendifferenz während des Kompressionschalls und bei der Spannungsamplitude während des Schweißschalls, die allerdings nicht als sicherer Klassifikatoren taugen, bestenfalls als Unterstützung der Klassifikation durch die Betriebsfrequenz.

Der Versuch mit kontrollierter Verunreinigung mit Handcreme ermöglicht auch den Nachweis, dass einige Kurven eine Korrelation mit der Bruchkraft aufweisen. Gruppiert man die Schweißproben nach ihrer Bruchkraft zeigt sich, dass die Betriebsfrequenz ein guter Klassifikator ist, um sehr schlechte Proben, die unter 100N Bruchkraft aufweisen, von guten Proben, die über 109N Bruchkraft aufweisen, mittels Schwingungsanalyse zu trennen. Auf diese Weise können sehr kritische Schweißungen detektiert werden.

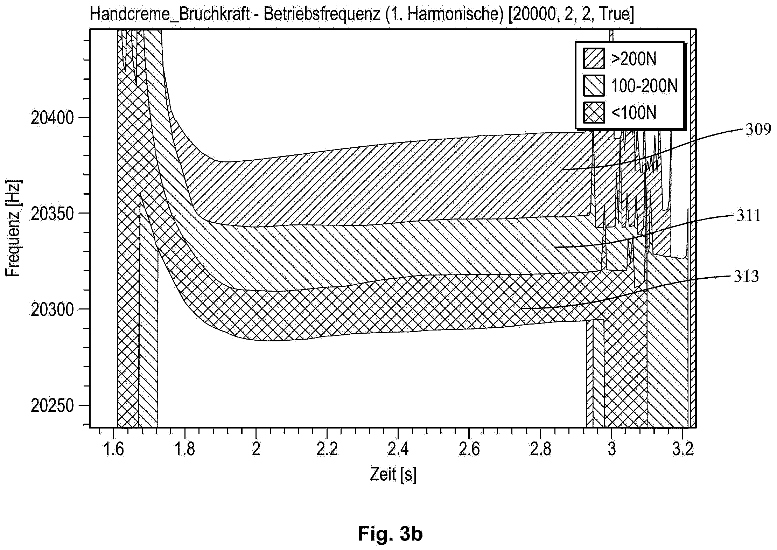

Fig. 3b zeigt einen Graphen eines Frequenzverlaufs gemäß einem weiteren Ausführungsbeispiel. Auf der Abszissenachse ist die Zeit und auf der Ordinatenachse die Frequenz aufgetragen, hier im Bereich von 20250 Hz unten und 20450 Hz oben.

Die Kurven 309, 311 und 313 zeigen eine Aufteilung der Schweißproben nach ihrer Bruchkraft. Bei der Kurve 309 wurden über 200 N Bruchkraft aufgewendet, um die Probe zu zerstören. Bei der Kurve 311 wurden über zwischen 100 N und 200 N Bruchkraft aufgewendet, um die Probe zu zerstören. Bei der Kurve 313 wurden unter 100 N Bruchkraft aufgewendet, um die Probe zu zerstören.

Die Schwingungsanalyse kann Defekte an der Schweißanlage 100 erkennen. Treten Schäden am Transducer auf, dann sind diese sehr deutlich an den Kurven zu erkennen. Die Stromamplitude sinkt stark und die Phasendifferenz steigt. Als Folge ist der Transducer nicht mehr in der Lage, ausreichend Leistung in die Fügezone einzubringen, wodurch auch die Schweißzeit erheblich ansteigt, und keine stoffschlüssige Verbindung zustande kommt.

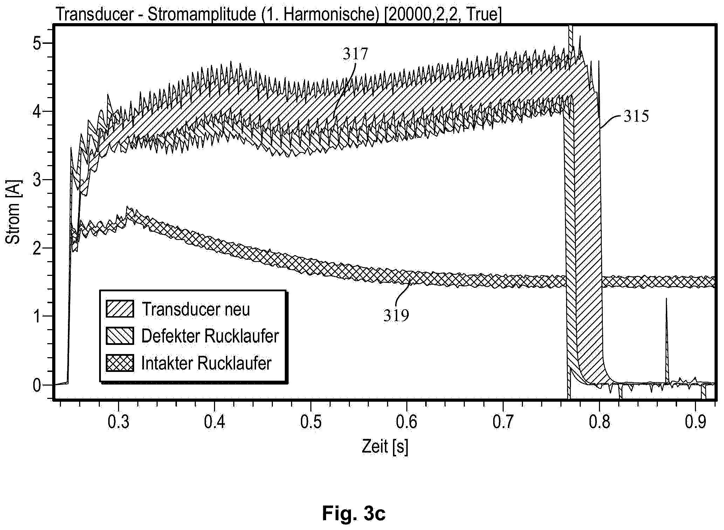

Fig. 3c zeigt einen Graphen eines Stromverlaufs gemäß einem Ausführungsbeispiel. Auf der Abszissenachse ist die Zeit und auf der Ordinatenachse der Strom aufgetragen, hier im Bereich von 0A unten und 5A oben.

Die Kurve 315 zeigt den Stromverlauf eines neuen Transducers, die Kurve 317 zeigt den Stromverlauf eines intakten gebrauchten Transducers und die Kurve 319 zeigt den Stromverlauf eines defekten gebrauchten Transducers. Es ist klar ersichtlich, dass die Kurve 319 stark abfällt. Somit lässt sich der Zustand des Transducers erfassen.

Auch Rüstfehler, die eine Veränderung der Randbedingungen für die Schwingung bewirken, lassen sich detektieren. Wird z.B. beim Rüsten vergessen, den Höhenanschlag festzuschrauben, kann dieser im Laufe mehrerer Schweißungen nach oben rutschen und die Sonotrode 105 ist auf Anschlag während die Schweißung noch im Gange ist und weiter Normaldruck auf den Schweißknoten ausüben sollte. Dies lässt sich mittels Schweißhöhenüberwachung und Schweißzeitüberwachung teilweise nicht nachweisen, obwohl die Bruchkräfte bereits erheblich gesunken sind.

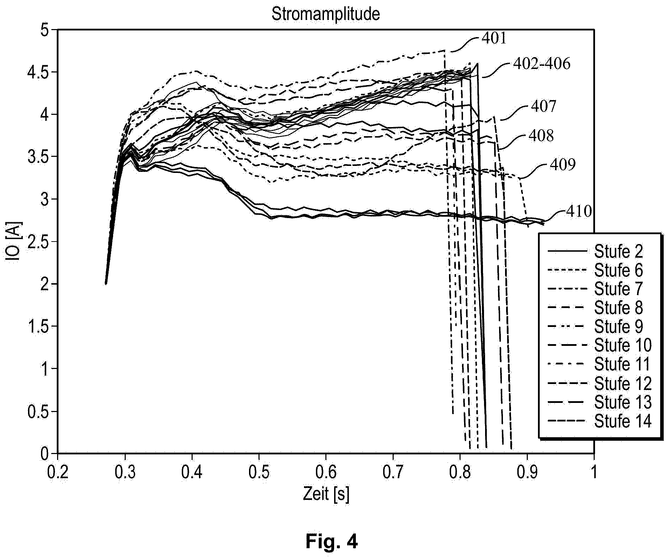

Fig. 4 zeigt einen Graphen eines Stromverlaufs gemäß einem Ausführungsbeispiel. Auf der Abszissenachse ist die Zeit und auf der Ordinatenachse der Strom aufgetragen, hier im Bereich von 0A unten und 5A oben.

Hierbei sind 10 Kurven 401 bis 410 über die Zeit aufgetragen. Die Kurven 402 bis 406 sind eng beieinander und der Strom steigt an. Die Kurven 407 bis 410 fallen hingegen stark ab. Hieraus lässt sich ableiten, dass bei diesen Durchläufen der Höhenanschlag fehlerhaft eingestellt war.

Mit der mechanischen Schwingungsmessung, d.h. mit Hilfe der Messung der Auslenkung der Sonotrode 105 konnte ein Anlagendefekt in der Schweißanlage 100 detektiert werden. Nach dadurch angestoßener Überprüfung der Anlage konnte ein Federbruch festgestellt werden.

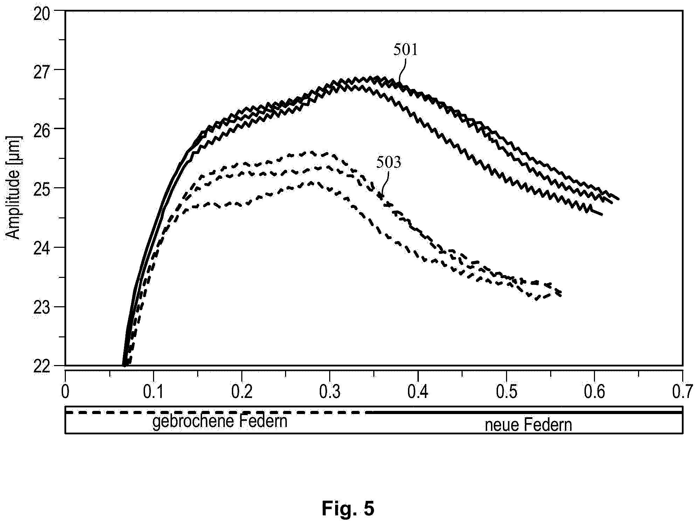

Fig. 5 zeigt einen Graphen eines Amplitudenverlaufs einer Sonotrodenauslenkung gemäß einem Ausführungsbeispiel. Die Kurven 501 zeigen einen Verlauf bei neuen Federn. Die Kurven 503 zeigen einen Verlauf bei gebrochenen Federn. Ein Abfall der Amplitude ist klar ersichtlich.

Auch bei der mechanischen Schwingungsanalyse ist darauf zu achten, dass verschiedene Schweißanlagen 100 unterschiedliche Kurven zeigen, zur Analyse also eine anlagenspezifische Referenzkurve vorteilhaft ist. Wie bei der elektrischen Schwingungsanalyse ist zur Detektion schlechter Schweißqualität ein Einlernprozess vorteilhaft. Bereits unterschiedliche Leitungschargen führen zu erheblich veränderten Kurven. Kontaktteil-Chargen hatten in diesem Versuch jedoch keinen Einfluss.

### Bezugszeichenliste

- 100: Schweißanlage
- 101: Ultraschallgenerator
- 103: Piezoaktor
- 105: Sonotrode
- 107: Kabelpaket
- 109: Messvorrichtung
- 200: Flussdiagramm
- 201 - 205: Verfahrensschritt
- 301 - 319: Kurve
- 401 - 410: Kurve
- 501, 503: Kurven

## Patentansprüche

1. Verfahren zum zerstörungsfreien Prüfen einer Qualität einer Ultraschallschweißung eines Kabelpaktes (107) mittels einer Sonotrode (105), welche mittels eines Schweißprozesses erfolgt, umfassend
Einlegen eines Kabelpaketes (107) in die Sonotrode (105),
Erfassen (201) einer zeitabhängigen Messgröße über einen Zeitraum, wobei die Messgröße charakteristisch für ein mechanisches Schwingverhalten des zu überprüfenden Schweißprozesses ist, wobei die Messgröße eine Auslenkung der Sonotrode (105) umfasst und mittels eines Wirbelstromsensors gemessen wird;
Auswerten (203) eines Messgrößenverlaufs der erfassten zeitabhängigen Messgröße durch Anwendung einer Fourieranalyse; und
Vergleichen (205) eines Ergebnisses der Auswertung mit einem eingelernten Referenzwert, um die Qualität der Ultraschallschweißung zu prüfen.

2. Verfahren nach Anspruch 1, wobei der Zeitraum der Dauer des Schweißprozesses entspricht.

3. Verfahren nach einem der Ansprüche 1 oder 2, wobei die Messgröße eine Scherkraft der Sonotrode (105) umfasst, wobei diese bei bekannter Normalkraft der Sonotrode mittels Kraftsensoren an einem Amboss geschätzt wird.

4. Verfahren nach einem der Ansprüche 1 oder 2, wobei die Messgröße ferner charakterisierend für ein elektrisches Schwingungsverhalten des Schweißprozesses ist und einen elektrischen Strom und/oder eine elektrische Spannung zur Ansteuerung eines Piezoaktors (103) umfasst.

5. Verfahren nach einem der vorstehenden Ansprüche, wobei das Erfassen einer Messgröße das Erfassen einer Differenzgröße und einer Flussgröße umfasst.

6. Verfahren nach einem der vorstehenden Ansprüche, wobei das Auswerten ein Errechnen einer Phasenbeziehung zweier erfasster Messgrößen, einer Betriebsfrequenz zum Betrieb einer Sonotrode (105), einer Amplitude einer Phase einer erfassten Messgröße und/oder einer Amplitude der Betriebsfrequenz zum Betrieb der Sonotrode (105) umfasst.

7. Verfahren Anspruch 6, wobei das Auswerten weiter ein Ableiten einer Leistungsgröße, insbesondere eine Scheinleistung, eine Wirkleistung, eine Blindleistung, und/oder eine Impedanzgröße, insbesondere Scheinwiderstand, Resistenz, Reaktanz, aus der errechneten Phasenbeziehung zweier erfasster Messgrößen umfasst.

8. Verfahren nach einem der vorstehenden Ansprüche, wobei das Auswerten auf Basis einer Grundschwingung und/oder einer Oberschwingung der erfassten Messgröße beruht.

9. Verfahren nach einem der vorstehenden Ansprüche, wobei das Vergleichen ein Vergleichen einer Phasendifferenz zwischen einem elektrischen Strom und einer elektrischen Spannung zum Ansteuern eines Piezoaktors (103) umfasst.

10. Verfahren nach einem der vorstehenden Ansprüche, wobei eine Referenzwertermittlung dem Erfassen vorausgeht und auf einer Testreihe und/oder auf einem selbstlernenden Algorithmus, insbesondere mit einem neuronalen Netz, basiert.

11. Verfahren nach einem der vorstehenden Ansprüche, umfassend ein Regeln des Schweißprozesses basierend auf einem Ergebnis des Vergleichs.

12. Verfahren nach Anspruch 11, wobei durch ein Anpassen eines Parameters einer den Schweißprozess durchführenden Schweißanlage basierend auf dem Ergebnis des Vergleichs.

13. Verfahren nach einem der vorstehenden Ansprüche, umfassend eine Schwingungsanalyse zur Darstellung der Dynamik des Schweißprozesses basierend auf dem Vergleich, um ein Unter- oder ein Überschweißen zu erfassen.

14. Messvorrichtung (109) zum zerstörungsfreien Prüfen einer Qualität einer Ultraschallschweißung, wobei die Messvorrichtung (109) einen Wirbelstromsensor aufweist, und die Messvorrichtung (109) dazu eingerichtet ist,
eine Messgröße über einen Zeitraum zu erfassen, wobei die Messgröße zumindest charakteristisch für ein mechanisches Schwingverhalten eines zu überprüfenden Schweißprozesses ist und wobei die Messgröße eine Auslenkung der Sonotrode (105) umfasst und mittels des Wirbelstromsensors gemessen wird;
die erfasste zeitabhängige Messgröße durch Anwendung einer Fourieranalyse auszuwerten; und
ein Ergebnis der Auswertung mit einem eingelernten Referenzwert zu vergleichen, um die Qualität der Schweißung zu prüfen.

15. Ultraschallschweißanlage (100) umfassend
eine Sonotrode (105) zum Aufbringen einer mechanischen Kraft auf ein Werkstück;
einen Piezoaktor (103), der eingerichtet ist, ein elektrisches Steuersignal in eine mechanische Schwingung umzusetzen und auf die Sonotrode (105) zu übertragen;
einen Ultraschallgenerator (101), der eingerichtet ist, das elektrische Steuersignal bereitzustellen; und
eine Messvorrichtung (109) gemäß Anspruch 14.

## Claims

1. Method for non-destructive testing of a quality of an ultrasonic weld of a cable package (107) by means of a sonotrode (105), which is produced by means of a welding process, comprising:
inserting a cable package (107) into the sonotrode (105);
acquiring (201) a time-dependent measured variable over a period of time, wherein the measured variable is characteristic of a mechanical oscillation behavior of the welding process to be examined, wherein the measured variable comprises a displacement of the sonotrode (105) and is measured by means of an eddy current sensor;
evaluating (203) a measured-variable profile of the acquired time-dependent measured variable by applying a Fourier analysis; and
comparing (205) a result of the evaluation with a learned reference value in order to check the quality of the ultrasonic weld.

2. Method according to claim 1, wherein the period corresponds to the duration of the welding process.

3. Method according to any one of claims 1 or 2, wherein the measured variable comprises a shear force of the sonotrode (105), which is estimated, given a known normal force of the sonotrode, by means of force sensors at an anvil.

4. Method according to any one of claims 1 or 2, wherein the measured variable is furthermore characteristic of an electrical oscillation behavior of the welding process and comprises an electric current and/or an electric voltage for actuating a piezo actuator (103).

5. Method according to any one of the preceding claims, wherein acquiring a measured variable comprises acquiring a difference variable and a flow variable.

6. Method according to any one of the preceding claims, wherein the evaluating comprises calculating a phase relationship of two acquired measured variables, an operating frequency for operating a sonotrode (105), an amplitude of a phase of an acquired measured variable, and/or an amplitude of the operating frequency for operating the sonotrode (105).

7. Method according to claim 6, wherein the evaluating further comprises deriving a power variable, in particular an apparent power, an active power, a reactive power, and/or an impedance variable, in particular apparent resistance, resistance, reactance, from the calculated phase relationship of two acquired measured variables.

8. Method according to any one of the preceding claims, wherein the evaluating is based on a fundamental oscillation and/or a harmonic of the acquired measured variable.

9. Method according to any one of the preceding claims, wherein the comparing comprises comparing a phase difference between an electric current and an electric voltage for actuating a piezo actuator (103).

10. Method according to any one of the preceding claims, wherein a determination of the reference value precedes the acquiring and is based on a test series and/or on a self-learning algorithm, in particular with a neural network.

11. Method according to any one of the preceding claims, comprising controlling the welding process based on a result of the comparison.

12. Method according to claim 11, wherein control is effected by adapting a parameter of a welding installation that performs the welding process based on the result of the comparison.

13. Method according to any one of the preceding claims, comprising a vibration analysis for representing the dynamics of the welding process based on the comparison in order to detect under-welding or overwelding.

14. Measuring device (109) for non-destructive testing of a quality of an ultrasonic weld, wherein the measuring device (109) comprises an eddy current sensor and is configured to:
acquire a measured variable over a period of time, wherein the measured variable is at least characteristic of a mechanical oscillation behavior of a welding process to be examined, and wherein the measured variable comprises a displacement of the sonotrode (105) and is measured by means of the eddy current sensor;
evaluate the acquired time-dependent measured variable by applying a Fourier analysis; and
compare a result of the evaluation with a learned reference value in order to check the quality of the weld.

15. Ultrasonic welding apparatus (100) comprising:
a sonotrode (105) for applying a mechanical force to a workpiece;
a piezo actuator (103) configured to convert an electrical control signal into a mechanical oscillation and to transmit it to the sonotrode (105);
an ultrasonic generator (101) configured to provide the electrical control signal; and
a measuring device (109) according to claim 14.

## Revendications

1. Procédé de contrôle non destructif de la qualité d'une soudure ultrasonore d'un faisceau de câbles (107) au moyen d'une sonotrode (105), ladite soudure étant réalisée par un procédé de soudage, comprenant:
introduction du faisceau de câbles (107) dans la sonotrode (105) ;
acquisition (201) d'une grandeur mesurée dépendant du temps sur une période, ladite grandeur étant caractéristique d'un comportement vibratoire mécanique du procédé de soudage à contrôler, ladite grandeur comprenant un déplacement de la sonotrode (105) et étant mesurée au moyen d'un capteur à courants de Foucault ;
évaluation (203) d'un profil de la grandeur mesurée acquise dépendant du temps par application d'une analyse de Fourier ; et
comparaison (205) d'un résultat de l'évaluation avec une valeur de référence apprise afin de vérifier la qualité de la soudure ultrasonore.

2. Procédé selon la revendication 1, dans lequel la période correspond à la durée du procédé de soudage.

3. Procédé selon l'une quelconque des revendications 1 ou 2, dans lequel la grandeur mesurée comprend une force de cisaillement de la sonotrode (105), celle-ci étant estimée, pour une force normale connue de la sonotrode, au moyen de capteurs de force sur une enclume.

4. Procédé selon l'une quelconque des revendications 1 ou 2, dans lequel la grandeur mesurée est en outre caractéristique d'un comportement vibratoire électrique du procédé de soudage et comprend un courant électrique et/ou une tension électrique pour commander un actionneur piézoélectrique (103).

5. Procédé selon l'une quelconque des revendications précédentes, dans lequel l'acquisition d'une grandeur mesurée comprend l'acquisition d'une grandeur différentielle et d'une grandeur de flux.

6. Procédé selon l'une quelconque des revendications précédentes, dans lequel l'évaluation comprend le calcul d'une relation de phase entre deux grandeurs mesurées acquises, d'une fréquence de fonctionnement pour la mise en œuvre d'une sonotrode (105), d'une amplitude d'une phase d'une grandeur mesurée acquise et/ou d'une amplitude de la fréquence de fonctionnement de la sonotrode (105).

7. Procédé selon la revendication 6, dans lequel l'évaluation comprend en outre la dérivation d'une grandeur de puissance, notamment une puissance apparente, une puissance active, une puissance réactive, et/ou d'une grandeur d'impédance, notamment une résistance apparente, une résistance, une réactance, à partir de la relation de phase calculée de deux grandeurs mesurées acquises.

8. Procédé selon l'une quelconque des revendications précédentes, dans lequel l'évaluation repose sur une oscillation fondamentale et/ou une harmonique de la grandeur mesurée acquise.

9. Procédé selon l'une quelconque des revendications précédentes, dans lequel la comparaison comprend la comparaison d'une différence de phase entre un courant électrique et une tension électrique pour commander un actionneur piézoélectrique (103).

10. Procédé selon l'une quelconque des revendications précédentes, dans lequel une détermination de la valeur de référence précède l'acquisition et repose sur une série d'essais et/ou sur un algorithme auto-apprenant, notamment utilisant un réseau neuronal.

11. Procédé selon l'une quelconque des revendications précédentes, comprenant la régulation du procédé de soudage sur la base d'un résultat de la comparaison.

12. Procédé selon la revendication 11, dans lequel la régulation est réalisée par adaptation d'un paramètre d'une installation de soudage exécutant le procédé de soudage sur la base du résultat de la comparaison.

13. Procédé selon l'une quelconque des revendications précédentes, comprenant une analyse vibratoire destinée à représenter la dynamique du procédé de soudage sur la base de la comparaison afin de détecter un sous-soudage ou un sur-soudage.

14. Dispositif de mesure (109) pour le contrôle non destructif de la qualité d'une soudure ultrasonore, le dispositif de mesure (109) comprenant un capteur à courants de Foucault et étant conçu pour :
acquérir une grandeur mesurée sur une période, ladite grandeur étant au moins caractéristique d'un comportement vibratoire mécanique d'un procédé de soudage à contrôler, ladite grandeur comprenant un déplacement de la sonotrode (105) et étant mesurée au moyen du capteur à courants de Foucault ;
évaluer la grandeur mesurée dépendant du temps par application d'une analyse de Fourier ; et
comparer un résultat de l'évaluation avec une valeur de référence apprise afin de vérifier la qualité de la soudure.

15. Installation de soudage par ultrasons (100) comprenant :
une sonotrode (105) destinée à appliquer une force mécanique sur une pièce ;
un actionneur piézoélectrique (103) configuré pour transformer un signal de commande électrique en une oscillation mécanique et pour la transmettre à la sonotrode (105) ;
un générateur ultrasonore (101) configuré pour fournir le signal de commande électrique ; et
un dispositif de mesure (109) selon la revendication 14.
